# EUROPÄISCHE PATENTSCHRIFT

(11) **EP 1 067 260 B1**
(45) Veröffentlichungstag und Bekanntmachung des Hinweises auf die Patenterteilung: **09.03.2005**
(21) Anmeldenummer: 00109152.9
(22) Anmeldetag: 08.05.2000
(51) Int. Cl.: E05B 49/00, G07C 9/00, B60R 25/04, H01H 27/06

(54) **Drehschalter, insbesondere zum Ein- und Ausschalten mindestens einer Kraftfahrzeug-Betriebseinheit**
Rotary switch, especially for switching on and off at least one operating unit of a vehicle
Connecteur rotatif, en particulier pour la mise en marche et l'arrêt d'au moins une unité de commande d'un véhicule

(30) Priorität: 08.07.1999 DE 29911960 U
(43) Veröffentlichungstag der Anmeldung: 10.01.2001
(73) Patentinhaber: Huf Hülsbeck & Fürst GmbH & Co. KG, 42551 Velbert (DE)
(72) Erfinder: Brunner, Matthias, 80995 München (DE); Landmann, Alfred, 82216 Maisach - Überacker (DE)
(74) Vertreter: Oedekoven, Wolf-Dieter, Dipl.-Ing.

(56) Entgegenhaltungen:
- EP-A- 0 846 820
- WO-A-99/60589
- DE-A- 4 340 260
- DE-U- 29 911 960

## Beschreibung

Die Erfindung bezieht sich auf einen Drehschalter, insbesondere zum Ein- und Ausschalten mindestens einer Kraftfahrzeug-Betriebseinheit, welcher einen Stator und einen mittels eines elektronischen Schlüssels im Stator drehbaren Rotor mit einem oder mehreren ersten Schaltelementen aufweist, das oder die mit einem oder mehreren zweiten Schaltelementen des Stators zusammenwirkt bzw. zusammenwirken, wobei der elektronische Schlüssel mit einem Transponder zur Übermittlung eines Identifizierungssignals an eine Steuereinheit versehen ist, welche das Identifizierungssignal überprüft und beim richtigen Identifizierungssignal das Drehen des Rotors erlaubt, und wobei eine Schubstange vorgesehen ist, welche vom elektronischen Schlüssel bei dessen Einführen in den Rotor axial verschoben wird, um die Steuereinheit zu aktivieren.

Es ist bekannt, Kraftfahrzeuge mit einer Wegfahrsperre auszurüsten, welche mit Hilfe einer Steuereinheit beispielsweise den Anlasserstromkreis, den Zündstromkreis und den Kraftstoffpumpenstromkreis des jeweiligen Kraftfahrzeugs unterbricht und mittels eines elektronischen Schlüssels mit einem Transponder zur Abgabe eines Identifizierungssignals an die Steuereinheit betätigbar ist, um diese Stromkreise zu schließen. Der elektronische Schlüssel wird in einen Schlüsselaufnehmer eingeführt, um mit der Schlüsselspitze einen an die Steuereinheit angeschlossenen Weckkontakt des Schlüsselaufnehmers zu schließen, so daß der Transponder auf ein Abfragesignal der Steuereinheit hin das Identifizierungssignal abgibt, welches die Steuereinheit auf seine Richtigkeit überprüft, um dann, wenn das Identifizierungssignal als richtig erkannt worden ist, den Anlasserstromkreis, den Zündstromkreis und den Kraftstoffpumpenstromkreis zu schließen (DE 44 01 852 C1).

Bekannt sind auch Kraftfahrzeug-Lenkschlösser, welche mittels eines mit einem Transponder zur Abgabe eines Identifizierungssignals versehenen elektronischen Schlüssels betätigbar sind und einen Permanentmagneten aufweisen, der beim Einführen des elektronischen Schlüssels in das Lenkschloß durch die Schlüsselspitze entgegen der Wirkung einer Rückstellfeder axial auf einen stationär angeordneten Hallgenerator zu verschoben wird, so daß der Hallgenerator einen Abfragesender aktiviert. Dieser übermittelt daraufhin ein Abfragesignal an den Transponder des elektronischen Schlüssels, welcher auf dasselbe mit dem Identifizierungssignal antwortet, das auf seine Richtigkeit überprüft wird. Wenn als richtig erkannt, kann beispielsweise ein Elektromagnet erregt werden, um das Drehen des elektronischen Schlüssels im Lenkschloß aus der dem Lenkschloßzustand "Halt" zugeordneten Drehstellung zu ermöglichen ( DE 39 21 893 A1).

Außerdem sind elektronische Lenkschlösser für Kraftfahrzeuge bekannt, welche einen Stator und einen Rotor aufweisen und mittels eines elektronischen Schlüssels betätigbar sind, der mit einem Transponder zur Abgabe eines Identifizierungssignals an eine Steuereinheit des elektronischen Lenkschlosses versehen ist. Der Rotor ist mittels des elektronischen Schlüssels im Stator drehbar und mit Hilfe eines auf einem axialen Vorsprung des Rotors axial verschieblichen, einerseits durch eine Verstellfeder belasteten und andererseits an einer Schubstange des Rotors abgestützten Mitnehmers mit einem im Stator drehbar gelagerten Betätigungssglied formschlüssig kuppelbar, welches zur Betätigung eines Sperrgliedes zum Verriegeln der Lenkspindel des jeweiligen Kraftfahrzeugs gegen Drehen und gegebenenfalls eines Zündanlaßschalters des Kraftfahrzeugs dient. Die Schubstange wird beim Einführen des elektronischen Schlüssels in den Rotor durch die Schlüsselspitze entgegen der Wirkung einer Rückstellfeder im Rotor axial verschoben, um einen Schalter des Stators, bei dem es sich um einen Tastschalter oder einen berührungslos arbeitenden Schalter handeln kann, zu betätigen, so daß die Steuereinheit aktiviert wird und ein Abfragesignal an den Transponder des elektronischen Schlüssels abgibt, auf welches der Transponder mit dem Identifizierungssignal antwortet. Das Identifizierungssignal wird von der Steuereinheit auf seine Richtigkeit überprüft. Wird diese festgestellt, dann bewirkt die Steuereinheit die Erregung eines Elektromagneten, welcher daraufhin einen am Stator vorgesehenen, mit dem Mitnehmer zusammenwirkenden Anschlag zurückzieht, so daß der Mitnehmer unter der Wirkung seiner Verstellfeder in Eingriff mit dem Betätigungssglied läuft und den Rotor mit dem Betätigungsglied kuppelt. Erst dann bewirkt ein Drehen des Rotors mittels des elektronischen Schlüssels das gleichzeitige Drehen des Betätigungsgliedes im Stator, wie zum bewegen des Lenkspindel-Sperrgliedes und gegebenenfalls zum Betätigen des Zündanlaßschalters erforderlich ( EP 0 846 820 A1 ).

Ferner sind elektronische Zündanlaßschalter für Kraftfahrzeuge bekannt, welche einen Stator und einen Rotor aufweisen und mittels eines elektronischen Schlüssels betätigbar sind, der mit einem Transponder zur Abgabe eines Identifizierungssignals an eine Steuereinheit des elektronischen Zündanlaßschalters versehen ist. Der Rotor ist mittels des elektronischen Schlüssels im Stator drehbar und mit ersten Schaltelementen ausgestattet, welche mit zweiten Schaltelementen des Stators zusammenwirken, um die Zündanlage und den Anlasser sowie gegebenenfalls weitere Betriebseinheiten des jeweiligen Kraftfahrzeugs ein- und auszuschalten. Der Stator ist mit einer Schubstange versehen, welche beim Einführen des elektronischen Schlüssels in den Rotor durch die Schlüsselspitze entgegen der Wirkung einer Rückstellfeder axial verschoben wird, um einen Schalter der Stators zu betätigen, so daß die Steuereinheit mit Strom versorgt wird und ein Abfragesignal an den Transponder des elektronischen Schlüssels abgibt, auf welches der Transponder mit dem Identifizierungssignal antwortet. Das Identifizierungssignal wird von der Steuereinheit auf seine Richtigkeit überprüft. Bei Feststellung der Richtigkeit bewirkt die Steuereinheit die Erregung eines Elektromagneten, der dann ein mit dem Rotor zusammenwirkendes Sperrglied in seine Lösestellung bewegt. Erst dann kann der Rotor mittels des elektronischen Schlüssels im Stator gedreht werden, wie zum Ein- und Ausschalten der Zündanlage, des Anlassers und jeder etwaigen weiteren Kraftfahrzeug-Betriebseinheit mit Hilfe der ersten und zweiten Schaltelemente erforderlich ( DE 43 40 260 A1).

Bei einer ebenfalls bekannten Variante dieser elektronischen Kraftfahrzeug-Zündanlaßschalter sind der Rotor und der Stator wie der Zylinderkern und das Zylindergehäuse eines gewöhnlichen Schließzylinders ausgebildet, indem der Rotor mit rahmenförmigen Plättchenzuhaltungen und der Stator mit Ausnehmungen für den Eingriff der Plättchenzuhaltungen versehen ist, welche durch den entsprechend dem Bart eines mechanischen Schlüssels profilierten Schaft des elektronischen Schlüssels aus den Ausnehmungen des Stators in den Rotor hinein zurückgezogen werden, so daß der Rotor im Stator erst gedreht werden kann, wenn der elektronische Schlüssel bzw. dessen Schaft vollständig in den Rotor eingeführt worden ist. Die Plättchenzuhaltungen des Rotors wirken mit Sensoren des Stators zusammen, welche an die Steuereinheit angeschlossen sind und deren Ausgangssignale von der Steuereinheit ausgewertet werden. Bei der vollständigen Einführung des elektronischen Schlüssels bzw. seines Schaftes in den Rotor bewirkt die Steuereinheit die Abgabe des Abfragesignals an den Transponder des elektronischen Schlüssels, damit dieser das Identifizierungssignal liefert. Das Sperren des Rotors gegen Drehen im Stator mittels der Plättchenzuhaltungen ist zusätzlich zum Sperren mittels des Sperrgliedes vorgesehen, welches nach Feststellung der Richtigkeit des Identifizierungssignals vom zugehörigen Elektromagneten in seine Lösestellung bewegt wird ( DE 197 51 805 C1).

Schließlich ist es bekannt, elektronische Kraftahrzeug-Zündanlaßschalter der besagten Art auch das Verriegeln und Entriegeln der Lenkspindel des jeweiligen Kraftfahrzeugs bewirken zu lassen, indem die Steuereinheit des Zündanlaßschalters einen reversierbaren Elektromotor ansteuert, der einen mit der Lenkspindel zusammenwirkenden, axial verschiebbaren Sperrbolzen bewegt ( DE 196 53 860 C1).

Weitere Kraftfahrzeug - Zündanlassschalter sind aus den im Prioritätsintervall der vorliegenden Erfindung veröffentlichten Entgegenhaltungen DE-U-29911960 und WO 99/60589 bekannt.

Der Erfindung liegt die Aufgabe zugrunde, einen Drehschalter der eingangs angegebenen Art zu schaffen, welcher auf einfache und kostengünstige Weise eine außerordentlich schnelle und zuverlässige Aktivierung der Steuereinheit gewährleistet.

Diese Aufgabe ist durch die im kennzeichnenden Teil des Patentanspruchs 1 aufgeführten Merkmale gelöst. Vorteilhafte Weiterbildungen des erfindungsgemäßen Drehschalters sind in den restlichen Patentansprüchen angegeben.

Nachstehend ist eine Ausführungsform des erfindungsgemäßen Drehschalters anhand von Zeichnungen beispielsweise beschrieben. Darin zeigen :
- Fig. 1: einen Längsschnitt eines elektronischen Zündanlaßschalters für Kraftfahrzeuge vor Einführung des zugehörigen elektronischen Schlüssels;
- Fig. 2: den Querschnitt entlang der Linie II - II in Fig. 1;
- Fig. 3: den Querschnitt entlang der Linie III - III in Fig. 1;
- Fig. 4: den Längsschnitt gemäß Fig. 1 nach Einführung des elektronischen Schlüssels in den elektronischen Zündanlaßschalter;
- Fig. 5: den Querschnitt entlang der Linie V - V in Fig. 4.

Der dargestellte elektronische Kraftfahrzeug-Zündanlaßschalter ist-mittels eines elektronischen Schlüssels 1 betätigbar und weist einen Stator 2 sowie einen Rotor 3 auf. Der Rotor 3 ist zweiteilig ausgebildet und besteht aus einem ersten Rotorteil 3a sowie einem zweiten Rotorteil 3b, welche koaxial zueinander angeordnet und im Stator 2 um eine Achse 4 drehbar gelagert sind.

Das erste Rotorteil 3a ist hülsenförmig ausgebildet und weist eine Öffnung 5 zur Einführung des elektronischen Schlüssels 1 sowie einen Kanal 6 auf, in welchem eine Schubstange 7 axial verschieblich gelagert ist. Die Längsachsen der Schlüsseleinführöffnung 5 und des Kanals 6 fallen mit der gemeinsamen Drehachse 4 des ersten Rotorteils 3a und des zweiten Rotorteils 3b zusammen.

Die Schubstange 7 ist durch eine Rückstellfeder 8 auf die Schlüsseleinführöffnung 5 zu belastet. Der der Schlüsseleinführöffnung 5 ferne Endabschnitt der Schubstange 7 ist als drallgebender Wendelabschnitt 9 mit unrundem, nämlich rechteckigem Querschnitt ausgebildet.

Das zweite Rotorteil 3b ist scheibenförmig ausgebildet und mit einer Öffnung 10 zur Aufnahme des drallgebenden Wendelabschnitts 9 der Schubstange 7 versehen. Die Öffnung 10 weist einen unrunden, nämlich rechteckigen Umriß auf, welcher der Gestalt des Querschnitts des drallgebenden Wendelabschnitts 9 angepaßt ist. Die Längsachse der Öffnung 10 fällt mit der gemeinsamen Drehachse 4 des ersten Rotorteils 3a und des zweiten Rotorteils 3b zusammen.

Auf der dem ersten Rotorteil 3a abgewandten Seite ist das zweite Rotorteil 3b mit mehreren ersten Schaltelementen 11 versehen, welche mit mehreren zweiten Schaltelementen 12 des Stators 2 berührungslos zusammenwirken, um verschiedene Kraftfahrzeug-Betriebseinheiten ein- und auszuschalten, insbesondere die Zündanlage und den Anlasser. Weiterhin weist das zweite Rotorteil 3b auf der dem ersten Rotorteil 3a abgewandten Seite ein Paar von dritten Schaltelementen 13 auf, das mit einem Paar von vierten Schaltelementen 14 des Stators 2 berührungslos zusammenwirkt, um eine Steuereinheit 15 zu aktivieren, welche mit einem Transponder 16 des elektronischen Schlüssels 1 kommuniziert und die Drehbarkeit des ersten Rotorteils 3a im Stator 2 überwacht. Sowohl die beiden dritten Schaltelemente 13 als auch die beiden vierten Schaltelemente 14 liegen einander bezüglich der gemeinsamen Drehachse 4 des ersten Rotorteils 3a und des zweiten Rotorteils 3b diametral gegenüber.

Die ersten Schaltelemente 11 und die dritten Schaltelemente 13 des zweiten Rotorteils 3b sind jeweils von einem Permanentmagneten gebildet, die zweiten Schaltelemente 12 und die vierten Schaltelemente 14 des Stators 2 jeweils von einem Hallgenerator. Die Hallgeneratoren sind auf einer gemeinsamen Leiterplatte 17 des Stators 2 angeordnet, die sich senkrecht zur Drehachse 4 des ersten Rotorteils 3a und des zweiten Rotorteils 3b erstreckt.

Der geschilderte elektronische Kraftfahrzeug-Zündanlaßschalter funktioniert folgendermaßen.

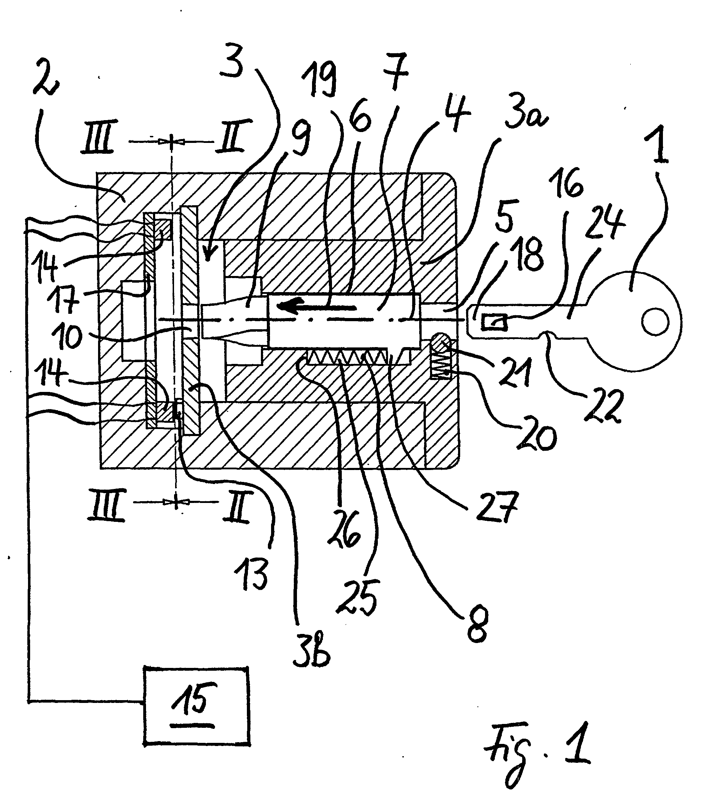

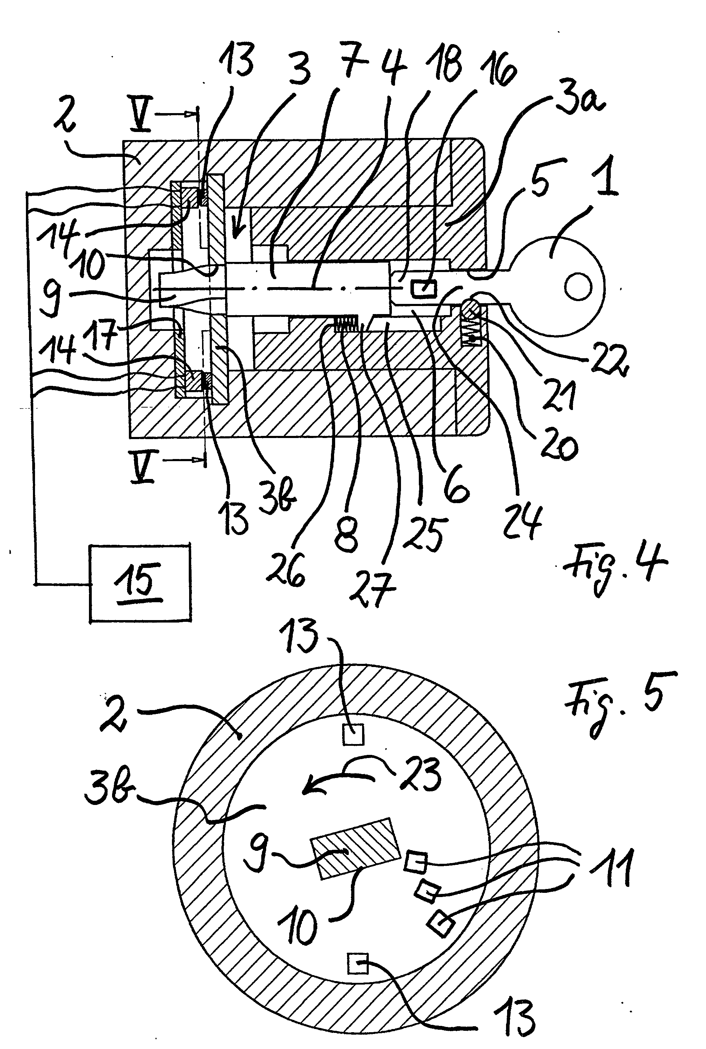

Wenn der elektronische Schlüssel 1 durch die Schlüsseleinführöffnung 5 hindurch in das erste Rotorteil 3a gesteckt wird, dann verschiebt er mit der Schlüsselspitze 18 die Schubstange 7 in dem auf die Schlüsseleinführöffnung 5 ausgerichteten und einen Umriß, der zur Verhinderung jeglichen Drehens der Schubstange 7 dem unrunden Querschnitt derselben angepaßt und entsprechend unrund gestaltet ist, aufweisenden Kanal 6 entgegen der Wirkung der Rückstellfeder 8 aus der axialen Endstellung gemäß Fig. 1 in Richtung des Pfeils 19 in die axiale Entstellung nach Fig. 4, in welcher sich das der Schlüsseleinführöffnung 5 zugewandte Ende des drallgebenden Wendelabschnitts 9 der Schubstange 7 in der Öffnung 10 des zweiten Rotorteils 3b befindet und der elektronische Schlüssel 1 mit dem ersten Rotorteil 3a verrastet ist, und zwar mittels einer durch eine Schraubendruckfeder 20 belasteten Rastkugel 21 des ersten Rotorteils 3a, welche in eine entsprechende Kerbe 22 des elektronischen Schlüssels 1 eingreift.

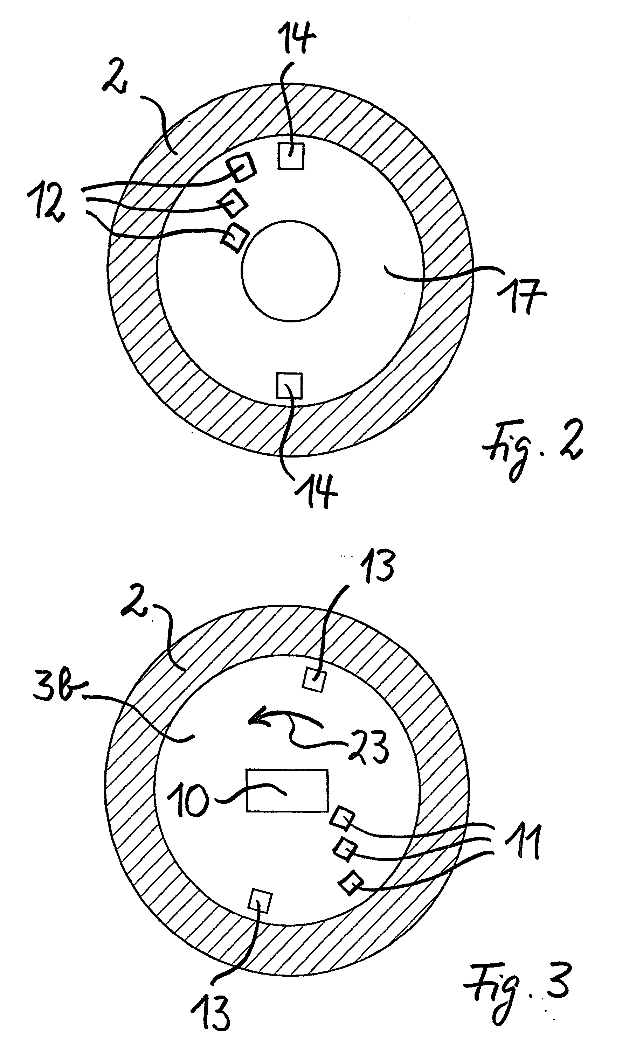

Bei dieser Axialverschiebung der Schubstange 7 im Kanal 6 des ersten Rotorteils 3a um eine Strecke von etwa 5 mm dreht der drallgebende Wendelabschnitt 9 der Schubstange 7 das zweite Rotorteil 3b um einen Winkel von etwa 15° aus der Drehstellung gemäß Fig. 3 in Richtung des Pfeils 23 in die Drehstellung nach Fig. 5, in welcher die beiden dritten Schaltelemente 13 des zweiten Rotorteils 3b den beiden vierten Schaltelementen 14 des Stators 2 gegenüberliegen, so daß die vierten Schaltelemente 14 jeweils ein Signal an die Steuereinheit 15 abgeben, um dieselbe zu aktivieren, welche dann das Aussenden eines Abfragesignals an den Transponder 16 des elektronischen Schlüssels 1 bewirkt, der darauf mit einem Identifizierungssignal antwortet. Dieses wird in der Steuereinheit 15 auf seine Richtigkeit überprüft. Wenn die Steuereinheit 15 das empfangene Identifizierungssignal als richtig erkennt, bewirkt sie die Erregung eines nicht dargestellten Elektromagneten, der dann ein mit dem ersten Rotorteil 3a zusammenwirkendes Sperrglied, welches gleichfalls nicht gezeigt ist, in seine Lösestellung bewegt, so daß das erste Rotorteil 3a mittels des elektronischen Schlüssels 1, dessen Schaft 24 unrunden Querschnitts mit der Schlüsseleinführöffnung 5 entsprechend unrunden Umrisses des ersten Rotorteils 3a zusammenwirkt, im Stator 2 gedreht werden kann, und zwar unter Mitnahme des zweiten Rotorteils 3b über die Schubstange 7 bei weiterem Drehen des zweiten Rotorteils 3b in Richtung des Pfeils 23 über die Drehstellung gemäß Fig. 5 hinaus, um mittels der ersten Schaltelemente 11 des zweiten Rotorteils 3b und der zweiten Schaltelemente 12 des des Stators 2 die zugehörigen Kraftfahrzeug-Betriebseinheiten einzuschalten, welche durch Rückdrehen des ersten Rotorteils 3a zusammen mit dem zweiten Rotorteil 3b entgegen der Richtung des Pfeils 23 mittels der ersten Schaltelemente 11 und der zweiten Schaltelemente 12 wieder abgeschaltet werden können.

Wie die vierten Schaltelemente 14 des Stators 2 können auch die zweiten Schaltelemente 12 des Stators 2 an die Steuerschaltung 15 angeschlossen sein, um über dieselbe die zugehörigen Kraftfahrzeug-Betriebseinheiten ein- und auszuschalten. Die von den vierten Schaltelementen 14 gelieferten Signale können zusätzlich zur Aktivierung der Steuereinheit 15 auch dazu verwendet werden, die oder einige der Kraftfahrzeug-Betriebseinheiten, welche mittels der ersten Schaltelemente 11 und der zweiten Schaltelemente 12 ein- und ausgeschaltet werden, zuvor freizuschalten.

Wenn auch bei dem dargestellten elektronischen Kraftfahrzeug-Zündanlaßschalter die Rückstellfeder 8 der Schubstange 7 als Schraubendruckfeder ausgebildet und neben der Schubstange 7 in einer Längsnut 25 des ersten Rotorteils 3a angeordnet ist, um sich einerseits an einer Stirnwand 26 der Längsnut 25 und andererseits an einem Seitenvorsprung 27 der Schubstange 7 abzustützen, so sind doch auch andere Ausbildungen und/oder Anordnungen möglich. Insbesondere kann die Rückstellfeder 8 von einer Schraubendruckfeder gebildet sein, welche koaxial zur gemeinsamen Drehachse 4 des ersten Rotorteils 3a und des zweiten Rotorteils 3b angeordnet ist und durch welche hindurch sich die Schubstange 7 erstreckt.

Der geschilderte elektronische Zündanlaßschalter für Kraftfahrzeuge weist einen einfachen Aufbau auf, kann kostengünstig hergestellt werden und stellt sicher, daß beim Einstecken des elektronischen Schlüssels 1 die Steuereinheit 15 in einer extrem kurzen Zeitspanne sehr zuverlässig aktiviert wird, so daß der elektronische Schlüssel 1 entsprechend schnell daraufhin überprüft werden kann, ob er dem elektronischen Zündanlaßschalter zugeordnet ist und das zugehörige Identifizierungssignal liefert, und zutreffendenfalls das erste Rotorteil 3a entsprechend schnell entriegelt werden kann, um mittels des elektronischen Schlüssels 1 zum Schalten der an den elektronischen Zündanlaßschalter angeschlossenen Kraftfahrzeug-Betriebseinheiten im Stator 2 gedreht werden zu können. Für die Strecke, um welche die Schubstange 7 axial verschoben werden muß, um die Aktivierung der Steuereinheit 15 auszulösen, können verhältnismäßig weite Toleranzen vorgesehen werden, ohne die Zuverlässigkeit der Auslösung zu beeinträchtigen.

## Patentansprüche

1. Drehschalter, insbesondere zum Ein- und Ausschalten mindestens einer Kraftfahrzeug-Betriebseinheit, welcher einen Stator (2) und einen mittels eines elektronischen Schlüssels (1) im Stator drehbaren Rotor (3) mit einem oder mehreren ersten Schaltelementen (11) aufweist, das oder die mit einem oder mehreren zweiten Schaltelementen (12) des Stators zusammenwirkt bzw. zusammenwirken, wobei der elektronische Schlüssel mit einem Transponder (16) zur Übermittlung eines ldentficierungssignals an eine Steuereinheit (15) versehen ist, welche das Identifizierungssignal überprüft und beim richtigen Identifizierungssignal das Drehen des Rotors erlaubt, und wobei eine Schubstange (7) vorgesehen ist, welche vom elektronischen Schlüssel bei dessen Einführen in den Rotor axial verschoben wird, um die Steuereinheit zu aktivieren, **dadurch gekennzeichnet, daß** der Rotor (3) zweiteilig ausgebildet ist und aus einem ersten Rotorteil (3a), in welches der elektronische Schlüssel (1) einführbar und in welchem die Schubstange (7) axial verschieblich gelagert ist, sowie einem zweiten Rotorteil (3b) besteht, welches
a) mit mindestens einem dritten Schaltelement (13) versehen ist, das zur Aktivierung der Steuereinheit (15) mit einem am Stator (2) vorgesehenen vierten Schaltelement (14) berührungslos zusammenwirkt, und
b) bei der Axialverschiebung der Schubstange (7) mittels eines drallgebenden Wendelabschnitts (9) unrunden Querschnitts der Schubstange (7), der mit einer Öffnung (10) entsprechend unrunden Umrisses des zweiten Rotorteils (3b) zusammenwirkt, bezüglich des ersten Rotorteils (3a) drehbar und nach der Axialverschiebung der Schubstange (7) zusammen mit dem ersten Rotorteil (3a) drehbar ist.

2. Drehschalter nach Anspruch 1, **dadurch gekennzeichnet, daß** das zweite Rotorteil (3b) mit einem Paar von dritten Schaltelementen (13) versehen ist, welches mit einem Paar von vierten Schaltelementen (14) des Stators (2) zusammenwirkt.

3. Drehschalter nach Anspruch 2, **dadurch gekennzeichnet, daß** sowohl die beiden dritten Schaltelemente (13) als auch die beiden vierten Schaltelemente (14) einander bezüglich der Drehachse (4) des zweiten Rotorteils (3b) diametral gegenüberliegen.

4. Drehschalter nach Anspruch 1, 2 oder 3, **dadurch gekennzeichnet, daß** das bzw. jedes dritte Schaltelement (13) ein Permanentmagnet und das bzw. jedes vierte Schaltelement (14) ein Hallgenerator ist.

5. Drehschalter nach Anspruch 4, **dadurch gekennzeichnet, daß** das bzw. jedes vierte Schaltelement (14) auf einer Leiterplatte (17) des Stators (2) angeordnet ist, die sich senkrecht zur Drehachse (4) des zweiten Rotorteils (3b) erstreckt.

6. Drehschalter nach einem der vorstehenden Ansprüche **dadurch gekennzeichnet, daß** das zweite Rotorteil (3b) mit dem bzw. den ersten Schaltelementen (11) versehen ist.

7. Drehschalter nach Anspruch 6,, **dadurch gekennzeichnet, daß** das bzw. die ersten Schaltelemente (11) des zweiten Rotorteils (3b) und das bzw. die zweiten Schaltelemente (12) des Stators (2) berührungslos zusammenwirken.

8. Drehschalter nach Anspruch 7, **dadurch gekennzeichnet, daß** das bzw. jedes erste Schaltelement (11) ein Permanentmagnet und das bzw. jedes zweite Schaltelement (12) ein Hallgenerator ist.

9. Drehschalter nach Anspruch 8, **dadurch gekennzeichnet, daß** das bzw. jedes zweite Schaltelement (12) auf einer bzw. auf der Leiterplatte (17) des Stators (2) angeordnet ist, die sich senkrecht zur Drehachse (4) des zweiten Rotorteils (3b) erstreckt.

10. Drehschalter nach einem der vorstehenden Ansprüche, **gekennzeichnet durch** eine solche Ausbildung des drallgebenden Wendelabschnitts (9) der Schubstange (7), daß das zweite Rotorteil (3b) sich um einen Winkel von etwa 15° dreht, wenn die Schubstange (7) **durch** den elektronischen Schlüssel (1) um eine Strecke von etwa 5 mm axial verschoben wird.

11. Drehschalter nach einem der vorstehenden Ansprüche, **dadurch gekennzeichnet, daß** der drallgebende Wendelabschnitt (9) der Schubstange (7) einen im wesentlichen rechteckigen Querschnitt und die Öffnung (10) des zweiten Rotorteils (3b) einen entsprechend im wesentlichen rechteckigen Umriß aufweist.

12. Drehschalter nach einem der vorstehenden Ansprüche, **dadurch gekennzeichnet, daß** die Schubstange (7) unrunden Querschnitts in einem Kanal (6) entsprechend unrunden Umrisses des ersten Rotorteils (3a) axial verschieblich gelagert ist, welcher koaxial zu einer Schlüsseleinführöffnung (5) des ersten Rotorteils (3a) angeordnet ist.

13. Drehschalter nach einem der vorstehenden Ansprüche, **dadurch gekennzeichnet, daß** die Schubstange (7) entgegen der Wirkung einer Rückstellfeder (8) vom elektronischen Schlüssel (1) axial verschiebbar ist.

14. Drehschalter nach Anspruch 13, **dadurch gekennzeichnet, daß** die Rückstellfeder (8) von einer Schraubendruckfeder gebildet ist, durch welche hindurch sich die Schubstange (7) erstreckt.

## Claims

1. Rotary switch, especially for switching on and off at least one operating unit of a vehicle, which comprises a stator (2) and a rotor (3), rotatable within the stator by means of an electronic key (1) and having one or more first switching elements (11), which co-operates or which co-operate with one or more second switching elements (12) of the stator, wherein the electronic key is provided with a transponder (16) for the communication of an identification signal to a control unit (15), which checks the identification signal and, in the presence of the correct identification signal, allows the rotation of the rotor, and wherein a push rod (7) is provided, which is axially displaced by the electronic key when the electronic key is inserted into the rotor, in order to activate the control unit, **characterised in that** the rotor (3) is designed in two parts and consists of a first rotor part (3a), into which the electronic key (1) can be inserted and in which the push rod (7) is mounted in an axially displaceable manner, and a second rotor part (3b), which
a) is provided with at least one third switching element (13), which co-operates with a fourth switching element (14) provided on the stator (2) in a non-contact manner in order to activate the control unit (15), and
b) in the case of the axial displacement of the push rod (7), can be rotated relative to the first rotor part (3a) by means of a rotation-inducing helical portion (9) of non-round cross-section of the push rod (7), which co-operates with an opening (10) of corresponding non-round outline of the second rotor part (3b), and can be rotated together with the first rotor part (3a) after the axial displacement of the push rod (7).

2. Rotary switch according to claim 1, **characterised in that** the second rotor part (3b) is provided with a pair of third switching elements (13), which co-operates with a pair of fourth switching elements (14) of the stator (2).

3. Rotary switch according to claim 2, **characterised in that** the two third switching elements (13) and also the two fourth switching elements (14) are diametrically opposite one another relative to the axis (4) of rotation of the second rotor part (3b).

4. Rotary switch according to claim 1, 2 or 3, **characterised in that** the third switching element (13) or respectively each third switching element (13) is a permanent magnet, and the fourth switching element (14) or respectively each fourth switching element (14) is a Hall generator.

5. Rotary switch according to claim 4, **characterised in that** the fourth switching element (14) or respectively each fourth switching element (14) is arranged on a circuit board (17) of the stator (2), which extends perpendicular to the axis (4) of rotation of the second rotor part (3b).

6. Rotary switch according to any one of the preceding claims, **characterised in that** the second rotor part (3b) is provided with the first switching element (11) or respectively the first switching elements (11).

7. Rotary switch according to claim 6, **characterised in that** the first switching element (11) or respectively the first switching elements (11) of the second rotor part (3b) and the second switching element (12) or respectively the second switching elements (12) of the stator (2) co-operate in a non-contact manner.

8. Rotary switch according to claim 7, **characterised in that** the first switching element (11) or respectively each first switching element (11) is a permanent magnet, and the second switching element (12) or respectively each second switching element (12) is a Hall generator.

9. Rotary switch according to claim 8, **characterised in that** the second switching element (12) or respectively each second switching element (12) is arranged on a circuit board (17) or respectively on the circuit board (17) of the stator (2), which extends perpendicular to the axis (4) of rotation of the second rotor part (3b).

10. Rotary switch according to any one of the preceding claims, **characterised by** a design of the rotation-inducing helical portion (9) of the push rod (7) such that the second rotor part (3b) rotates about an angle of approximately 15° when the push rod (7) is axially displaced by the electronic key (1) through a distance of approximately 5 mm.

11. Rotary switch according to any one of the preceding claims, **characterised in that** the rotation-inducing helical portion (9) of the push rod (7) has an essentially rectangular cross-section, and the opening (10) of the second rotor part (3b) has a corresponding, essentially rectangular outline.

12. Rotary switch according to any one of the preceding claims, **characterised in that** the push rod (7) of non-round cross-section is mounted in an axially displaceable manner in a channel (6) of corresponding non-round outline of the first rotor part (3a), which is arranged coaxially to a key insertion opening (5) of the first rotor part (3a).

13. Rotary switch according to any one of the preceding claims, **characterised in that** the push rod (7) is axially displaceable by the electronic key (1) against the action of a return spring (8).

14. Rotary switch according to claim 13, **characterised in that** the return spring (8) is formed by a helical compression spring, through which the push rod (7) extends.

## Revendications

1. Commutateur rotatif, en particulier pour la mise en marche et l'arrêt d'au moins une unité d'opération d'un véhicule, comprenant un stator (2) et un rotor (3) pouvant être entraîné en rotation dans le stator au moyen d'une clef électronique (1) et possédant un ou plusieurs premiers éléments de commutation (11), qui coopère ou coopèrent avec un ou plusieurs deuxièmes éléments de commutation (12) du stator, la clef électronique étant dotée d'un transpondeur (16) pour la transmission d'un signal d'identification à une unité de commande (15) qui vérifie le signal d'identification et, en cas de signal d'identification correct, autorise la rotation du rotor, et dans lequel il est prévu une bielle (7) qui est déplacée dans le sens axial par la clef électronique lors de l'insertion de celle-ci dans le rotor pour activer l'unité de commande, **caractérisé en ce que** le rotor (3) est conformé en deux parties et se compose d'une première partie de rotor (3a) dans laquelle la clef électronique (1) peut être insérée et dans laquelle la bielle (7) est mobile dans le sens axial, ainsi que d'une deuxième partie de rotor (3b), qui
a) est pourvue d'au moins un troisième élément de commutation (13) qui coopère sans contact, en vue de l'activation de l'unité de commande (15), avec un quatrième élément de commutation (14) prévu sur le stator (2) et
b) peut être tournée par rapport à la première partie de rotor (3a) en cas de déplacement axial de la bielle (7) au moyen d'une partie en spirale (9) créant un mouvement de rotation et de section non circulaire de la bielle (7), qui coopère avec une ouverture (10) de contour non circulaire correspondant dans la seconde partie de rotor (3b), et peut être tournée avec la première partie de rotor (3a) après le déplacement axial de la bielle (7).

2. Commutateur rotatif selon la revendication 1, **caractérisé en ce que** la seconde partie de rotor (3b) est pourvue d'une paire de troisièmes éléments de commutation (13) qui coopère avec une paire de quatrièmes éléments de commutation (14) du stator (2).

3. Commutateur rotatif selon la revendication 2, **caractérisé en ce que** aussi bien les deux troisièmes éléments de commutation (13) que les deux quatrièmes éléments de commutation (14) sont diamétralement opposés l'un à l'autre par rapport à l'axe de rotation (4) de la seconde partie de rotor (3b).

4. Commutateur rotatif selon la revendication 1, 2 ou 3, **caractérisé en ce que** le ou chaque troisième élément de commutation (13) est un aimant permanent et le ou chaque quatrième élément de commutation (14) est un générateur à effet Hall.

5. Commutateur rotatif selon la revendication 4, **caractérisé en ce que** le ou chaque quatrième élément de commutation (14) est disposé sur une plaque de circuits (17) du stator (2) qui s'étend perpendiculairement à l'axe de rotation (4) de la seconde partie de rotor (3b).

6. Commutateur rotatif selon l'une quelconque des revendications précédentes, **caractérisé en ce que** la seconde partie de rotor (3b) est pourvue du ou des premiers éléments de commutation (11).

7. Commutateur rotatif selon la revendication 6, **caractérisé en ce que** le ou les premiers éléments de commutation (11) de la seconde partie de rotor (3b) et le ou les seconds éléments de commutation (12) du stator (2) coopèrent sans contact.

8. Commutateur rotatif selon la revendication 7, **caractérisé en ce que** le ou chaque premier élément de commutation (11) est un aimant permanent et le ou chaque second élément de commutation (12) est un générateur à effet Hall.

9. Commutateur rotatif selon la revendication 8, **caractérisé en ce que** le ou chaque second élément de commutation (12) est disposé sur une ou sur la plaque de circuits (17) du stator (2) qui s'étend perpendiculairement à l'axe de rotation (4) de la seconde partie de rotor (3b).

10. Commutateur rotatif selon l'une quelconque des revendications précédentes, **caractérisé en ce que** la partie en spirale (9) de la bielle (7) créant un mouvement de rotation est conçue de telle sorte que la seconde partie de rotor (3b) tourne d'un angle d'environ 15° lorsque la bielle (7) est déplacée par la clef électronique (1) dans le sens axial sur une distance d'environ 5 mm.

11. Commutateur rotatif selon l'une quelconque des revendications précédentes, **caractérisé en ce que** la partie en spirale (9) de la bielle (7) créant un mouvement de rotation a une section sensiblement rectangulaire et l'ouverture (10) dans la seconde partie de rotor (3b) a un contour sensiblement rectangulaire correspondant.

12. Commutateur rotatif selon l'une quelconque des revendications précédentes, **caractérisé en ce que** la bielle (7) de section non circulaire est supportée de manière mobile dans le sens axial dans un canal (6) de contour non circulaire correspondant dans la première partie de rotor (3a), qui est coaxial par rapport à une ouverture d'introduction de la clef (5) dans la première partie de rotor (3a).

13. Commutateur rotatif selon l'une quelconque des revendications précédentes, **caractérisé en ce que** la bielle (7) peut être déplacée dans le sens axial par la clef électronique (1) contre l'action d'un ressort de rappel (8).

14. Commutateur rotatif selon la revendication 13, **caractérisé en ce que** le ressort de rappel (8) est formé par un ressort de compression hélicoïdal à travers lequel s'étend la bielle (7).
